# EUROPEAN PATENT SPECIFICATION

(11) **EP 2 629 129 B1**
(45) Date of publication and mention of the grant of the patent: **08.04.2015**
(21) Application number: 13155152.5
(22) Date of filing: 14.02.2013
(51) Int. Cl.: G02B 6/44

(54) **Distribution Apparatus**
Verteilungsvorrichtung
Appareil de distribution

(30) Priority: 14.02.2012 DE 202012001404 U
(43) Date of publication of application: 21.08.2013
(73) Proprietor: CCS Technology, Inc., Wilmington, DE 19803 (US)
(72) Inventor: Ciechomski, Tomasz Andrzej, 99-400 Lowicz (PL)
(74) Representative: Sturm, Christoph

(56) References cited:
- WO-A2-02/103429
- US-A- 3 188 524
- US-A- 4 160 880
- US-B1- 7 360 659

## Description

The present disclosure relates to a distribution apparatus for data conductors, in particular an optical waveguide distribution apparatus.

When designing data transmission networks, it is necessary to handle junctions between data conductors both outside housings and within housings. Outside of housings, junctions between data conductors are received in so-called cable sleeves or street distribution devices. Within buildings, junctions between data conductors are handled in so-called distribution cabinets or distribution racks. The data conductors to be handled are preferably optical waveguides, with a distribution apparatus which is used for handling optical waveguides also being referred to as an optical waveguide distribution apparatus. In contrast to this, however, it is also possible for other data conductors to be handled in a distribution apparatus, such as copper conductors, for example.

Distribution apparatuses which have long been known from practice have a frame-like or rack-like receiving device, on which at least one handling device for data conductors is fitted.

Distribution apparatuses according to the prior art are known from US 4,160,880 A, US 3,188,524 A, US 7,360,659 B1 and WO 02/103429 A2.

The present disclosure relates to a distribution apparatus for data conductors, in which at least one handling device for data conductors is fitted on the receiving device in such a way that it can pivot about a vertical axis, with a fastening bar of the respective handling device, which forms part of a pivot hinge of the respective handling device, being fastened on a fastening member of the receiving device for this purpose.

As a handling device is fitted on the receiving device of the distribution apparatus, the precise alignment of the fastening bar of the respective handling device with respect to the fastening member of the receiving device presents difficulties, which can result in a situation in which, after fitting of the respective handling device on the receiving device, said handling device cannot pivot faultlessly about the horizontal axis of the pivot hinge.

Against this background, the present disclosure is based on the object of providing a novel distribution apparatus.

This object is achieved by a distribution apparatus as claimed in claim 1. According to the disclosure, the fastening bar of the respective handling device has lug-like positioning projections, which engage in cutouts in the fastening member of the receiving device and are used for the horizontal and vertical alignment of the respective handling device with respect to the receiving device during fitting of the respective handling device on the receiving device. The lug-like positioning projections of the fastening bar of the respective handling device enable precise alignment of the fastening bar of the respective handling device relative to the fastening member of the receiving device of the distribution apparatus.

As a result, it is reliably possible using simple means to always ensure precise alignment of the handling device with respect to the receiving device during fitting thereof, with the result that faultless pivoting of the handling device relative to the receiving device of the distribution apparatus is then always possible.

Preferably, the lug-like positioning projections have a trapezoidal contour. The trapezoidally contoured, lug-like positioning projections allow simple insertion of the positioning projections into the corresponding cutouts in the fastening member of the receiving device.

In accordance with an advantageous development of the disclosure, the lug-like positioning projections are formed by sections of the fastening bar which have been cut free or stamped free and bent back or chamfered. Such fastening projections can be produced easily.

The fastening bar has, adjacent to a first lug-like positioning projection, a first cutout for receiving a first fastening device and, adjacent to a second lug-like positioning projection, a second cutout for receiving a second fastening device, the first cutout being aligned with a cutout in the fastening member of the receiving device and the second cutout being aligned with a further cutout in the fastening member of the receiving device via the positioning projections which likewise engage in cutouts in the fastening member of the receiving device.

Preferred developments of the disclosure result from the dependent claims and the description below. Exemplary embodiments of the disclosure will be explained in more detail with reference to the drawing, in which:
- figure 1: shows a perspective detail of a distribution apparatus in the region of a fastening member of a receiving device of the distribution apparatus and a fastening bar of a handling device which is mounted pivotably on the receiving device;
- figure 2: shows the arrangement in figure 1 in a second, perspective view;
- figure 3: shows a perspective view of the fastening bar of the handling device which is fitted pivotably on the receiving device; and
- figure 4: shows a cross section through the arrangements shown in figures 1 and 2.

The present disclosure relates to a distribution apparatus for data conductors, in particular for optical waveguides. Such a distribution apparatus is referred to as an optical waveguide distribution apparatus.

Although the disclosure is preferably used for optical waveguide distribution apparatuses, it can also be used for other distribution apparatuses, for example distribution apparatuses for copper lines.

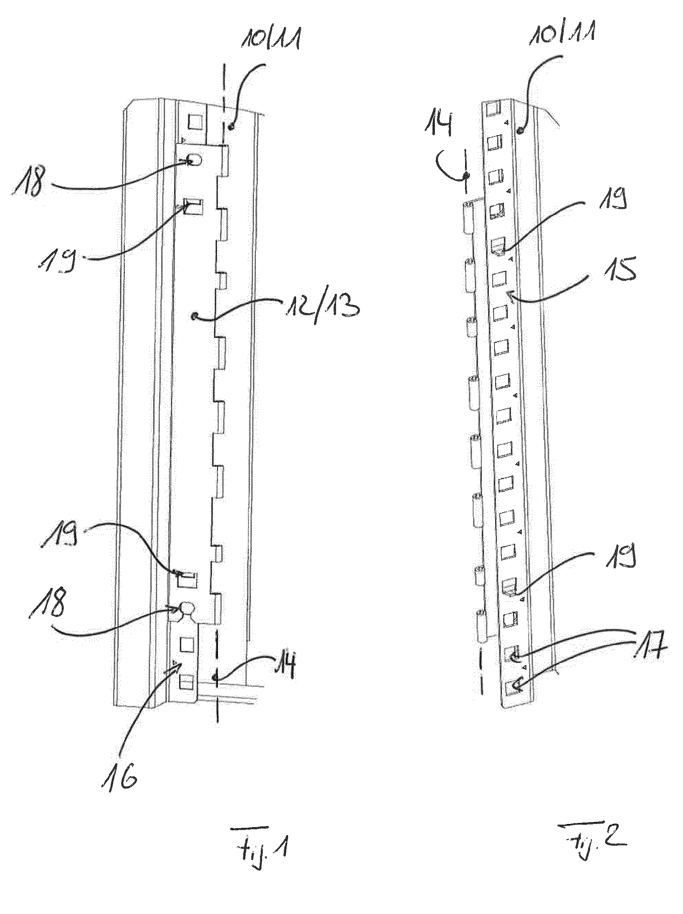

Figures 1 and 2 each show a perspective detail of a distribution apparatus in the region of a fastening member 10 of a frame-like or rack-like receiving device 11 and in the region of a fastening bar 12 of a handling device 13 for data conductors which is fitted on the receiving device 11 in such a way that it can pivot about a vertical axis. The fastening bar 12 forms part of a pivot hinge of the respective handling device 13, said pivot hinge providing the vertical axis 14 about which the handling device 13 can be pivoted relative to the receiving device 11.

The fastening member 10 can also be called fastening crosspiece. The fastening bar 12 can also be called fastening strip.

The fastening or fitting of the handling device 13 on the receiving device 11 or the fastening bar 12 of the handling device 13 on the fastening member 10 of the receiving device 11 is performed via fastening devices (not shown). These fastening devices (not shown) are preferably each formed by a fastening screw and a cage nut, which interacts with the fastening screw.

The cage nut acts on that side 15 of the fastening member 10 of the receiving device 11 which is visible in figure 2 and is opposite that side 16 of the fastening member 10 on which the fastening bar 12 of the handling device 13 acts during fitting. As shown in figures 1 and 2, a large number of cutouts 17 are introduced into the fastening member 10 of the receiving device 11, said cutouts being arranged with a defined spacing with respect to one another.

In the exemplary embodiment shown, in each case one fastening screw extends through two such cutouts 17 in the fastening member 10 of the receiving device 11, said fastening screws interacting with in each case one cage nut, these fastening screws extending not only through the cutouts 17 in the fastening member of the receiving device 11, but also through cutouts 18 in the fastening bar 12 of the handling device 13.

The cutouts 17 and 18 of fastening member 10 and fastening bar 12, through which the fastening screws extend, need to be precisely aligned with one another during fitting of the handling device 13 on the receiving device 11 in order to make precise fitting of the handling device 13 on the receiving device 11 possible.

In the context of the present disclosure, the fastening bar 12 of the respective handling device 13 has lug-like positioning projections 19.

These lug-like positioning projections 19 engage in further cutouts 17 in the fastening member 10 of the receiving device 11 during fitting of the respective handling device 13 on the receiving device 11 and are used for the horizontal and vertical alignment of the respective handling device 13 with respect to the receiving device 11 during fitting of the handling device 13 on the receiving device 11. As a result, during fitting, the precise horizontal and vertical alignment of the respective handling device 13 to be fitted on the receiving device 11 can be ensured.

Adjacent to a first, lug-like positioning projection 19, a first cutout 18 and, adjacent to a second, lug-like positioning projection 19, a second cutout 18 in the fastening bar 12 of the handling device 13 is positioned, said projections each being used to receive a fastening screw.

As has already been mentioned, these cutouts 18 in the fastening bar 12 of the respective handling device 13 are aligned with cutouts 17 in the fastening member 10 of the receiving device 11, this alignment being ensured in the horizontal and vertical direction via the lug-like positioning projections 19.

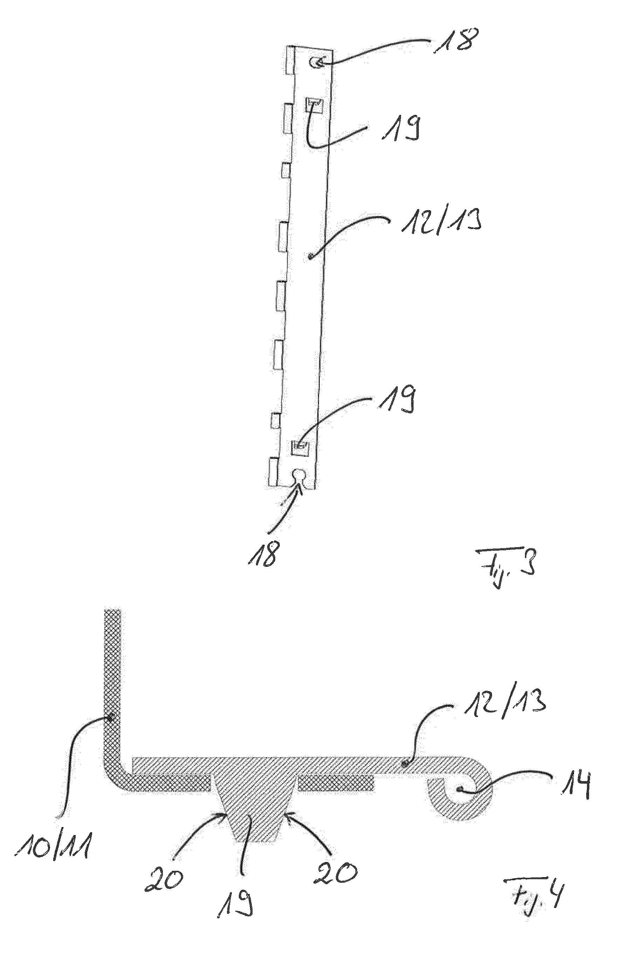

As can best be seen from figure 4, the lug-like positioning projections 19 have a trapezoidal contour, with limiting walls 20 of the trapezoidally contoured positioning projections 19, starting from the fastening bar 12, converging in the direction of their free ends.

As a result, it is possible for the positioning projections 19 to be inserted into the cutouts 17 in the fastening member 10 of the receiving device 11 in a particularly simple and advantageous manner.

Preferably, the lug-like positioning projections 19 are formed by sections of the fastening bar 12 of the respective handling device 13 which have been cut free or stamped free and bent back or chamfered. Such an embodiment is particularly simple in design terms.

As can be seen from figures 1 and 3, one of the cutouts 18 in the fastening bar 12 of the respective handling device 13 is delimited on all sides by the fastening bar 12, whereas an opening slot is introduced into the other cutout 18. This allows advantageous fitting of the handling device 13 on the receiving device 11 since, as a result, residual tolerances which may be present can be compensated for.

As can be seen from figure 2, the lug-like positioning projections 19 of the fastening bar 12 of the respective handling device 13 rest, in the fitted state, on lower limiting edges of those cutouts 17 in the fastening member 10 of the receiving device 11 into which the respective lug-like positioning projections 19 have been inserted. This provides the alignment in the vertical direction.

The alignment in the horizontal direction is provided by the limiting walls 20 of the lug-like positioning projections 19.

### List of Reference Signs

- 10: Fastening member
- 11: Receiving device
- 12: Fastening bar
- 13: Handling device
- 14: Axis
- 15: Wall
- 16: Wall
- 17: Cutout
- 18: Cutout
- 19: Positioning projection
- 20: Limiting wall

## Claims

1. A distribution apparatus for data conductors, in particular an optical waveguide distribution apparatus, with a frame-like or rack-like receiving device (11), on which at least one handling device (13) for data conductors is fitted such that the respective handling device (13) is fitted, via a fastening bar (12) thereof, which forms part of a pivot hinge of the respective handling device (13), on a fastening member (10) of the receiving device (11) such that it can pivot about a vertical axis (14), wherein the fastening bar (12) of the respective handling device (13) has lug-like positioning projections (19), which engage in cutouts (17) in the fastening member (10) of the receiving device (11) and are used for the horizontal and vertical alignment of the respective handling device (13) with respect to the receiving device (11) during fitting of the respective handling device (13) on the receiving device (11).

2. The distribution apparatus as claimed in claim 1, wherein the fastening bar (12), adjacent to a first lug-like positioning projection (19), has a first cutout (18) for receiving a first fastening device, the first cutout (18) being aligned with a cutout (17) in the fastening member (10) of the receiving device (11) via the positioning projections (19) which likewise engage in cutouts (17) in the fastening member (10) of the receiving device (11).

3. The distribution apparatus as claimed in claim 2, wherein the fastening bar (12), adjacent to a second lug-like positioning projection (19), has a second cutout (18) for receiving a second fastening device, the second cutout (18) being aligned with a cutout (17) in the fastening member (10) of the receiving device (11) via the positioning projections (19) which likewise engage in cutouts (17) in the fastening member (10) of the receiving device (11).

4. The distribution apparatus as claimed in claim 3, wherein the second cutout (18) has a slot-like opening.

5. The distribution apparatus as claimed in one of claims 1 to 4, wherein the first fastening device and the second fastening device are each formed by a fastening screw and a cage nut, which interacts with the fastening screw.

6. The distribution apparatus as claimed in one of claims 1 to 5, wherein the lug-like positioning projections (19) have a trapezoidal contour.

7. The distribution apparatus as claimed in claim 6, wherein limiting walls (20) of the positioning projections (19), starting from the fastening bar (12) of the respective handling device (13), converge in the direction of their free ends.

8. The distribution apparatus as claimed in one of claims 1 to 7, wherein the lug-like positioning projections (19) are formed by sections of the fastening bar (12) which have been cut free or stamped free and bent back or chamfered.

## Patentansprüche

1. Verteilervorrichtung für Datenleiter, insbesondere Lichtwellenleiterverteilervorrichtung, mit einer rahmenartigen oder gestellartigen Aufnahmeeinrichtung (11), an welcher mindestens eine Handhabungseinrichtung (13) für Datenleiter derart montiert ist, dass die jeweilige Handhabungseinrichtung (13) über eine Befestigungsleiste (12) derselben, die einen Teil eines Schwenkscharniers der jeweiligen Handhabungseinrichtung (13) bildet, an einem Befestigungsholm (10) der Aufnahmeeinrichtung (11) um eine vertikale Achse (14) schwenkbar montiert ist, wobei die Befestigungsleiste (12) der jeweiligen Handhabungseinrichtung (13) laschenartige Positionierungsvorsprünge (19) aufweist, die in Ausnehmungen (17) des Befestigungsholms (10) der Aufnahmeeinrichtung (11) eingreifen und der horizontalen sowie vertikalen Ausrichtung der jeweiligen Handhabungseinrichtung (13) bezüglich der Aufnahmeeinrichtung (11) bei der Montage der jeweiligen Handhabungseinrichtung (13) an der Aufnahmeeinrichtung (11) dienen.

2. Verteilervorrichtung nach Anspruch 1, wobei die Befestigungsleiste (12) benachbart zu einem ersten laschenartigen Positionierungsvorsprung (19) eine erste Ausnehmung (18) zur Aufnahme einer ersten Befestigungseinrichtung aufweist, wobei die erste Ausnehmung (18) mit einer Ausnehmung (17) des Befestigungsholms (10) der Aufnahmeeinrichtung (11) über die Positionierungsvorsprünge (19), die ebenfalls in Ausnehmungen (17) des Befestigungsholms (10) der Aufnahmeeinrichtung (11) eingreifen, fluchtend ausgerichtet ist.

3. Verteilervorrichtung nach Anspruch 2, wobei die Befestigungsleiste (12) benachbart zu einem zweiten laschenartigen Positionierungsvorsprung (19) eine zweite Ausnehmung (18) zur Aufnahme einer zweiten Befestigungseinrichtung aufweist, wobei die zweite Ausnehmung (18) mit einer Ausnehmung (17) des Befestigungsholms (10) der Aufnahmeeinrichtung (11) über die Positionierungsvorsprünge (19), die ebenfalls in Ausnehmungen (17) des Befestigungsholms (10) der Aufnahmeeinrichtung (11) eingreifen, fluchtend ausgerichtet ist.

4. Verteilervorrichtung nach Anspruch 3, wobei die zweite Ausnehmung (18) eine schlitzartige Öffnung aufweist.

5. Verteilervorrichtung nach einem der Ansprüche 1 bis 4, wobei die erste Befestigungseinrichtung und die zweite Befestigungseinrichtung jeweils von einer Befestigungsschraube und einer mit der Befestigungsschraube zusammenwirkenden Käfigmutter gebildet sind.

6. Verteilervorrichtung nach einem der Ansprüche 1 bis 5, wobei die laschenartigen Positionierungsvorsprünge (19) trapezartig konturiert sind.

7. Verteilervorrichtung nach Anspruch 6, wobei Begrenzungswände (20) der Positionierungsvorsprünge (19) ausgehend von der Befestigungsleiste (12) der jeweiligen Handhabungseinrichtung (13) in Richtung ihrer freien Enden konvergieren.

8. Verteilervorrichtung nach einem der Ansprüche 1 bis 7, wobei die laschenartigen Positionierungsvorsprünge (19) durch frei geschnittene bzw. frei gestanzte und umgebogene bzw. abgekantete Abschnitte der Befestigungsleiste (12) ausgebildet sind.

## Revendications

1. Appareil de distribution pour des conducteurs de données, en particulier appareil de distribution pour guide d'onde optique, avec un dispositif de réception de type cadre ou de type rack (11), sur lequel au moins un dispositif de manipulation (13) pour des conducteurs de données est disposé de telle sorte que le dispositif de manipulation respectif (13) soit disposé, par le biais d'une barre de fixation (12) de celui-ci qui fait partie d'une articulation à pivot du dispositif de manipulation respectif (13), sur un organe de fixation (10) du dispositif de réception (11) de telle sorte qu'il puisse pivoter autour d'un axe vertical (14), la barre de fixation (12) du dispositif de manipulation respectif (13) ayant des saillies de positionnement de type ergot (19) qui s'engagent dans des découpes (17) dans l'organe de fixation (10) du dispositif de réception (11) et qui sont utilisées pour l'alignement horizontal et vertical du dispositif de manipulation respectif (13) par rapport au dispositif de réception (11) au cours de l'ajustement du dispositif de manipulation respectif (13) sur le dispositif de réception (11).

2. Appareil de distribution selon la revendication 1, dans lequel la barre de fixation (12), adjacente à une première saillie de positionnement de type ergot (19), présente une première découpe (18) pour recevoir un premier dispositif de fixation, la première découpe (18) étant alignée avec une découpe (17) dans l'organe de fixation (10) du dispositif de réception (11) par le biais des saillies de positionnement (19) qui s'engagent de même dans des découpes (17) dans l'organe de fixation (10) du dispositif de réception (11).

3. Appareil de distribution selon la revendication 2, dans lequel la barre de fixation (12), adjacente à une deuxième saillie de positionnement de type ergot (19), présente une deuxième découpe (18) pour recevoir un deuxième dispositif de fixation, la deuxième découpe (18) étant alignée avec une découpe (17) dans l'organe de fixation (10) du dispositif de réception (11) par le biais des saillies de positionnement (19) qui s'engagent de même dans des découpes (17) dans l'organe de fixation (10) du dispositif de réception (11).

4. Appareil de distribution selon la revendication 3, dans lequel la deuxième découpe (18) présente une ouverture de type fentes.

5. Appareil de distribution selon l'une quelconque des revendications 1 à 4, dans lequel le premier dispositif de fixation et le deuxième dispositif de fixation sont chacun formés par une vis de fixation et un écrou-cage, qui s'engage avec la vis de fixation.

6. Appareil de distribution selon l'une quelconque des revendications 1 à 5, dans lequel les saillies de positionnement de type ergot (19) ont un contour trapézoïdal.

7. Appareil de distribution selon la revendication 6, dans lequel des parois de limitation (20) des saillies de positionnement (19), en commençant à partir de la barre de fixation (12) du dispositif de manipulation respectif (13), convergent dans la direction de leurs extrémités libres.

8. Appareil de distribution selon l'une quelconque des revendications 1 à 7, dans lequel les saillies de positionnement de type ergot (19) sont formées par des sections de la barre de fixation (12) qui ont été séparées par découpage ou estampage et recourbées ou chanfreinées.
